# FASCICULE DE BREVET EUROPEEN

(11) **EP 0 877 490 B1**
(45) Date de publication et mention de la délivrance du brevet: **26.03.2003**
(21) Numéro de dépôt: 98410049.5
(22) Date de dépôt: 06.05.1998
(51) Int. Cl.: H03M 3/02, H04B 14/06

(54) **Procédé et dispositif de communication sur des convertisseurs delta sigma**
Verfahren und Gerät zur achrichtenübertragung über Delta-Sigma-Wandler
Method and device for communication over delta-sigma converters

(30) Priorité: 07.05.1997 FR 9705867
(43) Date de publication de la demande: 11.11.1998
(73) Titulaire: STMicroelectronics S.A., 92120 Montrouge (FR)
(72) Inventeur: Combe, Michel, 38240 Meylan (FR); Fraisse, Christian, 38000 Grenoble (FR)
(74) Mandataire: de Beaumont, Michel

(56) Documents cités:
- DE-A- 1 512 474
- GB-A- 1 201 923
- US-A- 5 610 606

## Description

La présente invention concerne le domaine des convertisseurs numérique-analogique et analogique-numérique. L'invention concerne plus particulièrement des convertisseurs dits "delta-sigma" qui procèdent à un codage/décodage des signaux numériques à une fréquence très nettement supérieure à la fréquence d'échantillonnage, et qui utilisent des convertisseurs numérique-analogique et analogique-numérique proprement dits sur un seul bit.

La présente invention s'applique plus particulièrement à des échanges d'informations, autres que les données traitées par les convertisseurs, entre des circuits communiquant par l'intermédiaire de convertisseurs delta-sigma.

Des convertisseurs delta-sigma sont utilisés, par exemple, dans des modems de transmission de données sur une ligne téléphonique. Dans une telle application, une partie analogique du modem connectée à la ligne téléphonique doit être isolée galvaniquement d'entrées/sorties numériques du modem reliées, par exemple, à un processeur numérique de signal ou à un micro-ordinateur. D'autres signaux que les données proprement dites doivent généralement transiter par la barrière d'isolement galvanique du modem. Ces signaux supplémentaires nécessitent des moyens d'isolement additionnels, séparés des moyens d'isolement par lesquels transitent les données, ce qui est néfaste au coût et à l'encombrement du modem.

Des convertisseurs delta-sigma sont également utilisés dans d'autres applications, par exemple entre un circuit numérique de traitement de données audio et un circuit analogique de restitution ou d'enregistrement d'un signal audio. Dans de telles applications, il est fréquent que d'autres informations que les données audio proprement dites doivent être transférées entre les parties numérique et analogique du système. Le transfert de telles informations supplémentaires nécessite classiquement des liaisons supplémentaires dédiées à ces informations.

La présente invention vise à proposer un nouveau procédé de transfert d'informations entre deux circuits échangeant des données par l'intermédiaire d'un convertisseur numérique-analogique ou analogique-numérique de type delta-sigma sans qu'il soit nécessaire de prévoir des liaisons supplémentaires dédiées à ces informations.

Une première solution consisterait à réserver, côté numérique, un certain nombre de bits à ces informations supplémentaires. Toutefois, outre le fait qu'une telle solution augmente le nombre de bits, elle n'est pas satisfaisante dans la mesure où elle permet de transférer des informations que du circuit numérique vers le circuit analogique. De plus, de telles informations polluent alors le signal analogique de données proprement dites.

Un objet de la présente invention est de proposer un procédé de transfert d'informations qui, tout en permettant l'utilisation d'une liaison servant au convertisseur, ne pollue pas le transfert des données proprement dites.

L'invention vise également à ne pas modifier le nombre de bits sur lesquels fonctionne le convertisseur.

Pour atteindre ces objets, la présente invention prévoit un procédé de transfert d'informations entre deux circuits échangeant des données par l'intermédiaire de convertisseurs delta-sigma, qui consiste : à coder les informations sous la forme d'au moins un signal de fréquence déterminée correspondant à un multiple entier d'une fréquence d'échantillons de données numériques ; à mélanger, à une première extrémité d'une ligne véhiculant un signal numérique sur-échantillonné du convertisseur, ledit signal de fréquence déterminée ; à extraire du mélange, à une deuxième extrémité de ladite ligne, ledit signal de fréquence déterminée ; et à décoder les informations correspondantes.

Selon un mode de réalisation de la présente invention, plusieurs informations supplémentaires sont transférées en étant chacune associée à une fréquence déterminée correspondant à un multiple entier de la fréquence des échantillons de données numériques.

Selon un mode de réalisation de la présente invention, la fréquence de sur-échantillonnage du convertisseur delta-sigma est choisie pour être très nettement supérieure à la fréquence des échantillons numériques.

Selon un mode de réalisation de la présente invention, appliqué à un convertisseur numérique-analogique, ladite ligne relie un circuit de mise en forme de bruit à un convertisseur sur un bit des sur-échantillons numériques, ledit signal de fréquence déterminée étant mélangé, aux échantillons de données numériques, en amont du circuit de mise en forme de bruit.

Selon un mode de réalisation de la présente invention, appliqué à un convertisseur analogique-numérique, ladite ligne relie un modulateur délivrant des sur-échantillons sur un bit à un décimateur numérique, ledit signal de fréquence déterminée étant mélangé, à un signal analogique de données, en amont du modulateur.

Selon un mode de réalisation de la présente invention, les données numériques sont des données audio.

Selon un mode de réalisation de la présente invention, ladite ligne traverse une barrière d'isolement galvanique séparant des parties numériques et analogiques du convertisseur.

La présente invention concerne également un dispositif de transfert d'informations sur une ligne de données numériques sur-échantillonnées d'un convertisseur delta-sigma numérique-analogique, qui comporte : des moyens pour coder au moins un signal d'informations sous la forme d'un signal de fréquence déterminée correspondant à un multiple entier d'une fréquence d'échantillonnage des données numériques introduites dans le convertisseur ; des moyens pour mélanger, à une première extrémité de la ligne, le signal de fréquence déterminée au signal de données numériques sur-échantillonnées délivré par un circuit de mise en forme de bruit du convertisseur ; et des moyens pour extraire, à une deuxième extrémité de la ligne, le signal de fréquence déterminée du signal mélangé.

La présente invention concerne également un dispositif de transfert d'informations sur une ligne de données numériques sur-échantillonnées d'un convertisseur delta-sigma analogique-numérique, qui comporte : des moyens pour coder au moins un signal d'information à transmettre sous la forme d'un signal de fréquence déterminée correspondant à un multiple entier d'une fréquence d'échantillonnage des données numériques restituées par le convertisseur ; des moyens pour mélanger, à une première extrémité de la ligne, le signal de fréquence déterminée à un signal de données numériques sur-échantillonnées délivré par un modulateur recevant un signal de données analogiques ; et des moyens pour extraire, à une deuxième extrémité de la ligne, le signal de fréquence déterminée du signal mélangé.

Selon un mode de réalisation de la présente invention, le dispositif comporte en outre des moyens pour multiplexer plusieurs signaux de fréquences déterminées avant lesdits moyens de mélange, et des moyens pour démultiplexer ces signaux de fréquences déterminées à la deuxième extrémité de la ligne.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, sous forme de schéma-bloc, un convertisseur numérique-analogique delta-sigma associé à un dispositif de transfert d'informations selon la présente invention ;
la figure 2 illustre la répartition spectrale du transfert d'informations et de données dans un dispositif tel que représenté à la figure 1 ;
la figure 3 représente, sous forme de schéma-bloc, un convertisseur delta-sigma analogique-numérique associé à un dispositif de transfert d'informations selon la présente invention ; et
la figure 4 illustre la répartition spectrale du transfert d'informations et de données dans un dispositif tel que représenté à la figure 3.

Pour des raisons de clarté, seuls les éléments des convertisseurs delta-sigma qui sont nécessaires à la compréhension de l'invention ont été représentés aux figures et seront décrits par la suite.

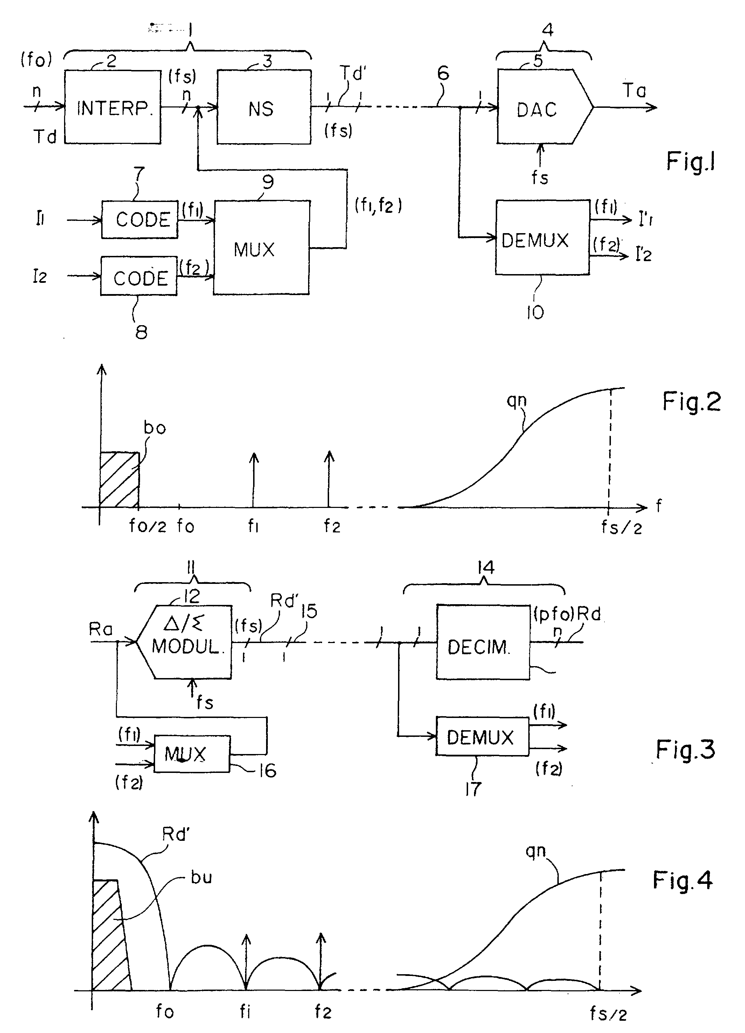

La figure 1 représente un mode de réalisation d'un convertisseur delta-sigma numérique-analogique associé à un dispositif de transfert d'informations supplémentaires selon la présente invention.

Un convertisseur delta-sigma comporte une partie 1 numérique de filtrage et de mise en forme de mots Td de données sur n bits en un signal numérique Td' sur un seul bit. Le signal Td traverse un filtre 2 d'interpolation (INTERP) qui constitue un filtre à réponse impulsionnelle finie présentant des zéros à chaque multiple de la fréquence f0 des échantillons du signal Td. Le filtre 2 est généralement précédé d'un filtre demi-bande (supposé inclus dans le bloc 2) qui délivre les échantillons à une fréquence p.f0 au filtre d'interpolation, p représentant un entier supérieur ou égal à 2. Le filtre 2 délivre des sur-échantillons numériques à une fréquence fs = p.q.f0, où q représente un nombre entier. Le produit p.q est généralement supérieur ou égal à 64. Les n sorties du filtre 2 sont envoyées sur un circuit 3 de mise en forme de bruit (NS) dont le rôle est de repousser le bruit de quantification hors de la bande utile. Le circuit 3 délivre le signal Td' sur un seul bit à la fréquence fs de sur-échantillonnage. Le signal Td' est envoyé sur une partie 4 analogique du convertisseur, essentiellement constituée d'un convertisseur 5 numérique-analogique (DAC) un bit travaillant à la fréquence de sur-échantillonnage fs et délivrant un signal analogique Ta. Le niveau d'un échantillon courant est déterminé en incrémentant, ou en décrémentant, le niveau de l'échantillon précédant en fonction de l'état du bit unique. Le convertisseur 5 réalise, en sortie, un filtrage passe-bas de façon à éliminer le bruit de quantification précédemment repoussé hors de la bande utile.

La figure 2 illustre le fonctionnement d'un tel convertisseur d'un point de vue fréquentiel. La bande utile bu contient les fréquences inférieures à la fréquence f0/2 d'échantillonnage des données et le bruit de quantification qn a une densité spectrale Gaussienne centrée sur la fréquence fs/2. La fréquence fs correspond généralement à un multiple très élevé de la fréquence f0. Par exemple, dans des applications audio la fréquence fs est d'environ 64 ou 128 fois la fréquence f0. Pour une transmission de données au moyen d'un modem, la fréquence fs correspond à un multiple généralement compris entre 96 et 256 de la fréquence f0.

La structure et le fonctionnement d'un convertisseur delta-sigma numérique-analogique sont parfaitement connus et ne seront pas détaillés plus avant.

Selon l'invention, on utilise la ligne 6 séparant le circuit 3 du convertisseur 5 pour transmettre des informations supplémentaires par rapport aux données. Cette transmission s'effectue à une ou plusieurs fréquences f1, f2, inférieures à la fréquence fs et correspondant à des multiples entiers de la fréquence f0. Dans l'exemple représenté, deux informations I1 et I2 sont transmises à des fréquences f1 et f2 correspondant, par exemple, à deux et trois fois la fréquence f0. Les informations I1 et 12 sont, par exemple, constituées de signaux binaires sur un bit qui traversent des codeurs (CODE) 7, 8 transformant ces signaux binaires en signaux fréquentiels à la fréquence f1. Les sorties respectives des codeurs 7 et 8 sont mélangées par un multiplexeur 9 (MUX). La sortie du multiplexeur 9 est mélangée au signal de données, à une première extrémité de la ligne 6. En pratique et comme l'illustre la figure 1, le mélange de la sortie du multiplexeur 9 aux données numériques s'effectue, de préférence, en amont du circuit 3 de mise en forme du bruit. Il est en effet peu pratique de mélanger des signaux fréquentiels à un signal numérique sur 1 bit. Le nombre de bits sur lesquels sont mélangés les fréquences f1 et f2 dépend de l'amplitude souhaitée pour ces fréquences. A l'autre extrémité de la ligne 6 (côté convertisseur 5), le signal mélangé est envoyé, d'une part, à l'entrée du convertisseur 5 et, d'autre part, à l'entrée d'un démultiplexeur 10 chargé de détecter la présence des fréquences f1 et f2 et de les séparer pour restituer les deux signaux d'informations I'1 et I'2 aux fréquences f1 et f2.

Comme l'illustre la figure 2, les fréquences f1 et f2 ne polluent pas les données traversant le convertisseur delta-sigma. En effet, ces fréquences sont situées entre la bande utile et la répartition du bruit de quantification autour de la fréquence fs/2.

La figure 3 représente un mode de réalisation d'un convertisseur delta-sigma analogique-numérique associé à un dispositif de transfert d'informations supplémentaires selon la présente invention.

Un convertisseur delta-sigma analogique-numérique comprend généralement une partie analogique 11 constituée d'un modulateur 12 (Δ/Σ MODUL) à une fréquence de sur-échantillonnage fs recevant un signal analogique Ra. Le modulateur 12 délivre des sur-échantillons numériques Rd' sur un bit à la fréquence fs. Le signal Rd' est envoyé sur un décimateur numérique 13 (DECIM) d'une partie numérique 14 du convertisseur. Le rôle du décimateur 13 est de convertir les sur-échantillons sur lbit en n échantillons Rd à la fréquence p.f0 (fs/q). Le décimateur 13 constitue. un filtre à réponse impulsionnelle finie comportant des zéros à chaque multiple de la fréquence f0 et réalise un filtrage passe-bas du signal Rd'. Les sorties du décimateur 13 traversent généralement un filtre demi-bande (supposé inclut dans le bloc 13) qui ramène les n échantillons à la fréquence f0 et délivre des signaux Rd sur n bits.

La figure 4 illustre la réponse fréquentielle d'un convertisseur delta-sigma analogique-numérique. Le bruit de quantification qn est comme précédemment de forme Gaussienne et centré sur la fréquence fs/2. La réponse fréquentielle du modulateur 12 présente des zéros à chaque multiple de la fréquence f0. Le décimateur 13 élimine toutes les fréquences supérieures à la bande utile bu du signal converti.

Comme pour le convertisseur numérique-analogique, la structure et le fonctionnement d'un convertisseur delta-sigma analogique-numérique sont parfaitement connus et ne seront pas détaillés plus avant.

Selon l'invention, pour transmettre des informations supplémentaires sur la ligne 15 séparant le modulateur 12 du décimateur 13, on utilise, comme dans le cas de la conversion numérique-analogique, une ou plusieurs fréquences correspondant à des multiples entiers de la fréquence f0. Si plusieurs informations supplémentaires doivent être transmises, ces informations sont comme précédemment multiplexées (MUX 16), et sont ici mélangées au signal Rd'. Le mélange est, de préférence, effectué en amont du modulateur 12, c'est-à-dire sur le signal Ra. A l'autre extrémité de la ligne 15, le signal est envoyé d'une part au décimateur 13 et d'autre part à un démultiplexeur 17 (DEMUX) chargé de détecter et d'isoler les fréquences f1 et f2 pour restituer les informations transmises. Bien entendu, comme dans le cas de la conversion numérique-analogique, les informations supplémentaires sont, le cas échéant, codées en amont du multiplexeur 16 et décodées en aval du démultiplexeur 17.

Comme il ressort de la figure 4, le transfert des informations supplémentaires aux fréquences f1 et f2 ne polluent pas les données dans la mesure où ces fréquences f1 et f2 sont filtrées avant restitution des données Rd. En effet, ces fréquences correspondent à des zéros du filtre à fréquence impulsionnelle finie 3 et sont comprises entre la bande utile du convertisseur et la répartition du bruit de quantification autour la fréquence fs/2.

Si pour des raisons de commodité de réalisation pratique, les signaux de fréquences fixes sont, pour un transfert utilisant le convertisseur numérique-analogique, générés sous forme de fréquences numériques à mélanger aux données proprement dites et, pour un transfert utilisant le convertisseur analogique-numérique, générés sous la forme de signaux analogiques à mélanger au signal analogique de données, on pourra également mélanger ces signaux aux signaux numériques sur-échantillonnés sur 1 bit, c'est-à-dire, en sortie du circuit 3 (figure 1) ou en sortie du circuit 12 (figure 2).

Le nombre de signaux d'informations supplémentaires qu'il est possible de transmettre en mettant en oeuvre la présente invention dépend du rapport entre la fréquence de sur-échantillonnage fs et la fréquence f0. Ainsi, on utilisera de préférence des convertisseurs delta-sigma ayant une fréquence de sur-échantillonnage nettement plus élevée que la fréquence f0. Cette condition est parfaitement compatible avec les rapports habituels entre les fréquences fs et f0 dans des applications audio ou de transmissions de données numériques au moyen d'un modem.

Pour mettre en oeuvre la présente invention dans un modem de transmission de données numériques entre un équipement utilisateur, par exemple un micro-ordinateur, et une ligne téléphonique, l'isolement galvanique entre la ligne téléphonique et l'équipement utilisateur est, selon l'invention, réalisé entre les parties numériques (1, 14) et analogiques (4, 11) des convertisseurs delta-sigma. Ainsi, des informations supplémentaires telles que des signaux de contrôle et de programmation de la partie analogique peuvent transiter par la même barrière d'isolement que les données sans nécessiter de moyens d'isolement supplémentaires.

Dans un système de restitution ou d'enregistrements de signaux sonores codés sous forme numérique, la mise en oeuvre de la présente invention permet de superposer sur une même ligne (6, 15) à la fois les données audio et des signaux de commande (par exemple, une consigne de volume à destination de la partie analogique de restitution sonore).

Un avantage de la présente invention est qu'elle permet de minimiser le nombre de connexions pour transmettre des informations entre des circuits échangeant des données au moyen de convertisseurs delta-sigma.

Bien entendu la présente invention est susceptible de diverses variantes et modifications qui apparaîtront à l'homme de l'art. En particulier, la réalisation pratique du codage des signaux d'informations à transmettre et des multiplexeurs et démultiplexeurs éventuels est à la portée de l'homme du métier en fonction des indications fonctionnelles données ci-dessus. De plus, le nombre et le choix des fréquences de transmission des informations supplémentaires dépendent de l'application à laquelle est destiné le dispositif de l'invention, pourvu que ces fréquences correspondent toujours à des multiples entiers de la fréquence d'échantillonnage des données. En outre, l'invention s'applique à tout système de conversion respectant les caractéristiques des convertisseurs delta-sigma 1 bit, c'est-à-dire présentant une liaison de transfert de données sur-échantillonnées sur 1 bit.

## Revendications

1. Procédé de transfert d'informations entre deux circuits échangeant des données par l'intermédiaire de convertisseurs delta-sigma, **caractérisé en ce qu'**il consiste :
à coder les informations (I1, I2) sous la forme d'au moins un signal de fréquence déterminée (f1, f2) correspondant à un multiple entier d'une fréquence (f0) d'échantillons de données numériques (Td, Rd) ;
à mélanger, à une première extrémité d'une ligne (6, I5) véhiculant un signal numérique sur-échantillonné du convertisseur, ledit signal de fréquence déterminée ;
à extraire du mélange, à une deuxième extrémité de ladite ligne, ledit signal de fréquence déterminée ; et
à décoder les informations correspondantes.

2. Procédé selon la revendication 1, **caractérisé en ce que** plusieurs informations supplémentaires (I1, I2) sont transférées en étant chacune associée à une fréquence déterminée (f1, f2) correspondant à un multiple entier de la fréquence des échantillons de données numériques.

3. Procédé selon la revendication 1 ou 2, **caractérisé en ce que** la fréquence de sur-échantillonnage (fs) du convertisseur delta-sigma est choisie pour être très nettement supérieure à la fréquence (f0) des échantillons numériques.

4. Procédé selon l'une quelconque des revendications 1 à 3, appliqué à un convertisseur numérique-analogique, **caractérisé en ce que** ladite ligne (6) relie un circuit (3) de mise en forme de bruit à un convertisseur (5) sur un bit des sur-échantillons numériques, ledit signal (f1, f2) de fréquence déterminée étant mélangé, aux échantillons de données numériques, en amont du circuit de mise en forme de bruit.

5. Procédé selon l'une quelconque des revendications 1 à 3, appliqué à un convertisseur analogique-numérique, **caractérisé en ce que** ladite ligne (15) relie un modulateur (12) délivrant des sur-échantillons sur un bit à un décimateur numérique (13), ledit signal (f1, f2) de fréquence déterminée étant mélangé, à un signal analogique de données (Ra), en amont du modulateur.

6. Procédé selon l'une quelconque des revendications 1 à 5, **caractérisé en ce que** les données numériques sont des données audio.

7. Procédé selon l'une quelconque des revendications 1 à 5, **caractérisé en ce que** ladite ligne (6, 11) traverse une barrière d'isolement galvanique séparant des parties numériques (1, 14) et analogiques (4, 11) du convertisseur.

8. Dispositif de transfert d'informations sur une ligne (6) de données (Td') numériques sur-échantillonnées d'un convertisseur delta-sigma numérique-analogique, **caractérisé en ce qu'**il comporte :
des moyens (7, 8, 9) pour coder au moins un signal d'informations (I1, I2) sous la forme d'un signal de fréquence déterminée (f1, f2) correspondant à un multiple entier d'une fréquence (f0) d'échantillonnage des données numériques (Td) introduites dans le convertisseur ;
des moyens pour mélanger, à une première extrémité de la ligne (6), le signal de fréquence déterminée au signal (Td') de données numériques sur-échantillonnées délivré par un circuit (3) de mise en forme de bruit du convertisseur ;
des moyens (10) pour extraire, à une deuxième extrémité de la ligne (6), le signal de fréquence déterminée du signal mélangé; et
des moyens pour décoder les informations correspondantes.

9. Dispositif de transfert d'informations sur une ligne (15) de données numériques sur-échantillonnées (Rd') d'un convertisseur delta-sigma analogique-numérique, **caractérisé en ce qu'**il comporte :
des moyens pour coder au moins un signal d'information à transmettre sous la forme d'un signal de fréquence déterminée (f1, f2) correspondant à un multiple entier d'une fréquence (f0) d'échantillonnage des données numériques (Rd) restituées par le convertisseur ;
des moyens pour mélanger, à une première extrémité de la ligne (15), le signal de fréquence déterminée à un signal (Rd') de données numériques sur-échantillonnées délivré par un modulateur (12) recevant un signal de données analogiques (Ra) ;
des moyens pour extraire, à une deuxième extrémité de la ligne (15), le signal de fréquence déterminée du signal mélangé; et
des moyens pour décoder les informations correspondantes.

10. Dispositif selon la revendication 8 ou 9, **caractérisé en ce qu'**il comporte en outre des moyens (9 ; 16) pour multiplexer plusieurs signaux de fréquences déterminées (f1, f2) avant lesdits moyens de mélange, et des moyens pour démultiplexer ces signaux de fréquences déterminées à la deuxième extrémité de la ligne (6 ; 15).

## Claims

1. A method of information transfer between two circuits exchanging data via delta-sigma converters, **characterized in that** it consists of:
coding the information (I1, I2) in the form of at least one signal of determined frequency (f1, f2) corresponding to an integer multiple of a frequency (f0) of digital data samples (Td, Rd);
mixing, at a first end of a line (6, 15) carrying an oversampled digital signal of the converter, said signal of determined frequency;
extracting from the mixture, at a second end of the line, said signal of determined frequency; and
decoding the corresponding information.

2. The method of claim 1, **characterized in that** several additional information signals (I1, I2) are transferred, each being associated with a determined frequency (f1, f2) corresponding to an integer multiple of the frequency of the digital data samples.

3. The method of claim 1 or 2, **characterized in that** the oversampling frequency (fs) of the delta-sigma converter is chosen to be much higher than the frequency (f0) of the digital samples.

4. The method of any of claims 1 to 3, applied to a digital-to-analog converter, **characterized in that** said line (6) connects a noise shaping circuit (3) to a converter (5) over one bit of the digital oversamples, the signal (f1, f2) of determined frequency being mixed to the digital data samples upstream of the noise shaping circuit.

5. The method of any of claims 1 to 3, applied to a digital-to-analog converter, **characterized in that** said line (15) connects a modulator (12) issuing oversamples over one bit to a digital decimator (13), the signal (f1, f2) of determined frequency being mixed to a digital data analog signal (Ra) upstream of the modulator.

6. The method of any of claims 1 to 5, **characterized in that** the digital data are audio data.

7. The method of any of claims 1 to 5, **characterized in that** said line (6, 11) crosses a galvanic isolation barrier separating digital (1, 14) and analog (4, 11) parts of the converter.

8. An information transfer device over a line (6) of oversampled digital data (Td') of a digital-to-analog delta-sigma converter, **characterized in that** it includes:
means (7, 8, 9) for coding at least one information signal (I1, I2) in the form of a signal of determined frequency (f1, f2) corresponding to an integer multiple of a sampling frequency (f0) of the digital data (Td) input into the converter;
means for mixing, at a first end of the line (6), the signal of determined frequency with the oversampled digital data signal (Td') issued by a circuit (3) for shaping the converter noise;
means (10) for extracting, at a second end of the line (6), the signal of determined frequency from the mixed signal; and
means for decoding the corresponding information.

9. An information transfer device over a line (15) of oversampled digital data (Rd') of an analog-to-digital delta-sigma converter, **characterized in that** it includes:
means for coding at least one information signal in the form of a signal of determined frequency (f1, f2) corresponding to an integer multiple of a sampling frequency (f0) of the digital data (Rd) restored by the converter;
means for mixing, at a first end of the line (15), the signal of determined frequency with an oversampled digital data signal (Rd') issued by a modulator (12) receiving an analog data signal (Ra);
means for extracting, at a second end of the line (15), the signal of determined frequency from the mixed signal; and
means for decoding the corresponding information.

10. The device of claim 8 or 9, **characterized in that** it further includes means (9; 16) for multiplexing several signals of determined frequencies (f1, f2) before the mixing means, and means for demultiplexing these signals of determined frequency at the second end of the line (6; 15).

## Patentansprüche

1. Verfahren zur Informationsübertragung zwischen zwei Schaltkreisen, die Daten über Delta-Sigma-Wandler austauschen, **gekennzeichnet durch** die Merkmale:
Codieren der Informationen (I1, I2) unter der Form zumindest eines Signales bestimmter Frequenz (f1, f2), die einem ganzzahligen Vielfachen einer Frequenz (f0) von digitalen Datenmustern (Td, Rd) entspricht;
Zumischen dieses Signales der bestimmten Frequenz an einem ersten Ende einer Leitung (6, 15), die ein digitales zusätlich gemustertes Signal des Wandlers führt ;
Extrahieren des Signales der bestimmten Frequenz aus der Mischung an einem zweiten Ende dieser Leitung; und
Decodieren der korrespondierenden Informationen.

2. Verfahren nach Anspruch 1, **dadurch gekennzeichnet, dass** mehrere zusätzliche Informationen (I1, I2) übertragen werden, wobei jede einer bestimmten Frequenz (f1, f2) zugeordnet ist, die einem ganzzahligen Vielfachen der Frequenz der digitalen Datenmuster entspricht.

3. Verfahren nach Anspruch 1 oder 2, **dadurch gekennzeichnet, dass** die Frequenz (fs) der zusätzlichen Bemusterung des Delta-Sigma-Wandlers so gewählt ist, dass sie sehr viel höher als die Frequenz (f0) der digitalen Muster ist.

4. Verfahren nach einem der Ansprüche 1 bis 3, angewendet auf einen Digital-Analog-Wandler, **dadurch gekennzeichnet, dass** die besagte Leitung (6) eine Schaltung (3) zum Formen von Rauschen mit einem Wandler (5) über ein Bit der digitalen zusätzlichen Muster verbindet, wobei das Signal (f1, f2) der bestimmten Frequenz den digitalen Datenmustern stromaufwärts der Schaltung zum Formen von Rauschen zugemischt wird.

5. Verfahren nach einem der Ansprüche 1 bis 3, angewendet auf einen Analog-Digital-Wandler, **dadurch gekennzeichnet, dass** die besagte Leitung (15) einen Modulator (12), der zussätzliche Muster liefert, über ein Bit mit einer digitalen Dezimalschaltung (13) verbindet, wobei das Signal (f1, f2) der bestimmten Frequenz einem analogen Datensignal (Ra) stromaufwärts des Modulators zugemischt wird.

6. Verfahren nach einem der Ansprüche 1 bis 5, **dadurch gekennzeichnet, dass** die digitalen Daten Audio-Daten sind.

7. Verfahren nach einem der Ansprüche 1 bis 5, **dadurch gekennzeichnet, dass** die besagte Leitung (6, 11) eine Barriere zur galvanischen Isolation durchquert, die die digitalen Teile (1, 14) und die analogen Teile (4, 11) des Wandlers trennt.

8. Einrichtung zur Informationsübertragung auf einer Leitung (6) für digitale erweitert gemusterte Daten (Td') eines digital-analogen Delta-Sigma-Wandlers, **gekennzeichnet durch** die Merkmale:
Einrichtungen (7, 8, 9) zum Codieren zumindest eines Informationssignales (I1, I2) unter der Form eines Signales bestimmter Frequenz (f1, f2), die einem ganzzahligen Vielfachen einer Frequenz (f0) von digitalen Datenmustern (Td) entspricht, die dem Wandler zugeführt werden;
Einrichtungen zum Mischen des Signales der bestimmten Frequenz mit dem Signal (Td') der zusätzlich gemusterten digitalen Daten an einem ersten Ende der Leitung (6), das von einer Schaltung (3) zum Formen von Rauschen des Wandlers geliefert wird;
Einrichtungen (10) zum Extrahieren des Signales bestimmter Frequenz aus dem Mischsignal an einem zweiten Ende der Leitung (6); und
Einrichtungen zum Decodieren der korrespondierenden Informationen.

9. Einrichtung zur Informationsübertragung über eine Leitung (15) für zusätzlich gemusterte digitale Daten (Rd') eines analog-digitalen Delta-Sigma-Wandlers, **gekennzeichnet durch** die Merkmale:
Einrichtungen zum Codieren zumindest eines zu übertragenden Informationssignales unter der Form eines Signales bestimmter Frequenz (f1, f2), die einem ganzzahligen Vielfachen einer Frequenz (f0) digitaler Datenmuster (Rd) entspricht, die **durch** den Wandler wieder hergestellt werden;
Einrichtungen, um an einem ersten Ende der Leitung (15) das Signal bestimmter Frequenz einem Signal (Rd') zusätzlich gemusterter digitaler Daten zuzumischen, welches von einem Modulator (12) geliefert wird, der ein Signal analoger Daten (Ra) empfängt;
Einrichtungen zum Ausblenden des Signales bestimmter Frequenz aus dem Mischsignal an einem zweiten Ende der Leitung (15); und
Einrichtungen zum Decodieren der korrespondierenden Informationen.

10. Einrichtung nach Anspruch 8 oder 9, **dadurch gekennzeichnet, dass** sie weiterhin Einrichtungen (9; 16) zum Multiplexen mehrerer Signale bestimmter Frequenzen (f1, f2) vor den Mischeinrichtungen und Einrichtungen zum Demultiplexen dieser Signale bestimmter Frequenzen am zweiten Ende der Leitung (6; 15) aufweist.
